# EUROPEAN PATENT APPLICATION

(11) **EP 1 736 311 A1**
(43) Date of publication of application: **27.12.2006**
(21) Application number: 06012729.7
(22) Date of filing: 21.06.2006
(51) Int. Cl.: B32B 37/15, B29C 47/88

(54) **Method and apparatus for fabrication of laminates**

(30) Priority: 22.06.2005 JP 2005182158
(71) Applicant: Fuji Photo Film Co., Ltd., Minami-Ashigara-shi, Kanagawa (JP)
(72) Inventor: Takase, Masanori, Fujinomiya-shi Shizuoka (JP); Miyasaka, Rei, Fujinomiya-shi Shizuoka (JP); Katsumoto, Ryuichi, Fujinomiya-shi Shizuoka (JP); Kegasawa, Tadahiro, Fujinomiya-shi Shizuoka (JP)
(74) Representative: HOFFMANN EITLE

(57) **Abstract**

It is made possible to manufacture laminates less susceptible to the occurrence of craters on the surface of the resin film (12) laminating (stuck to) the base (24) and excels in surface appearance. In a method for manufacturing laminates by sticking to the surface of a running belt-shaped base (24) a film (12) of thermoplastic resin discharged in a molten state from a die (14) by nipping the base (24) and the resin film (12) between a nip roller (18) and a cooling roller (16) while coating the base (24) with the resin film (12), wherein: a gas that can permeate the resin film (12) is blown from a gas blast nozzle (26) onto the roller surface of the cooling roller (16), brought to the nip position (P) while accompanying the rotation of the cooling roller (16), and an intercepting member (30) is provided upstream from the gas blowing position (Q) as viewed in the rotating direction of the cooling roller (16) to intercept air that accompanies the rotation of the cooling roller (16).

## Description

### BACKGROUND OF THE INVENTION

### Field of the Invention

The present invention relates to a method and an apparatus for manufacturing laminates, and more particularly to a technique of restraining the occurrence of craters on the surface of the resin film of laminates.

### Description of the Related Art

A method extensively employed in the manufacture of laminates including the bases of photographic printing paper is what is known as an extrusive lamination method (also known as an extrusion coating method) by which a running base is coated with a film of thermoplastic resin, such as polyolefin, discharged from an extrusion die in a nip position between a nip roller and a cooling roller, and at the same time nipped and crimped to laminate the base with the resin film.

In manufacturing such laminates, fine pores (hereinafter referred as "craters") may arise in the surface of the resin film with which the base is laminated. If the number of such craters is large, not only the appearance of the product will be marred but also the luster of the laminate, when it is used as the base of photographic printing paper for instance, will be reduced, resulting in a serious drop in the product value.

The occurrence of craters is alleged to be influenced by the line speed, the thickness of the resin film, the temperature of resin discharge from the die and the nipping pressure, but no definite cause or causes have been identified yet.

Many studies have been made from different aspects to find out an effective measure to prevent the occurrence of craters, including for instance ones from the viewpoint of resin as described in Japanese Patent Application Laid-Open No. 8-36238, others intended to define process conditions as disclosed in Japanese Patent Application Laid-Open No. 6-214342, and spraying of gas which can readily permeate a resin film as stated in Japanese Patent Application Laid-Open No. 63-246227 and Japanese Patent Application Laid-Open No. 2002-283452.

### SUMMARY OF THE INVENTION

However, any of crater-preventive measures disclosed in Japanese Patent Application Laid-Open No. 8-36238, Japanese Patent Application Laid-Open No. 6-214342, Japanese Patent Application Laid-Open No. 63-246227 and Japanese Patent Application Laid-Open No. 2002-283452, though more or less effective each in its own way, involves the problem of difficulty to remain effective when the line speed has become high or the temperature of resin discharge has been reduced.

An object of the present invention, attempted in view of this circumstance, is to provide a method and an apparatus for manufacturing laminates which facilitate manufacture of laminates less susceptible to the occurrence of craters on the surface of the resin film laminating (stuck to) the base and excels in surface appearance, and can still be effective even when the line speed has become high or the temperature of resin discharge has been reduced.

In order to achieve the object stated above, according to a first aspect of the invention, there is provided a method for manufacturing laminates comprising the steps of: nipping a running belt-shaped base and a film of thermoplastic resin discharged in a molten state from a die between a nip roller and a cooling roller while coating the base with the resin film whereby the base and the resin film are stuck together; blowing a gas that can permeate the resin film from a gas blast nozzle onto the roller surface of the cooling roller whereby the gas is brought to the position of the nipping by accompanying the rotation of the cooling roller; and intercepting an air that accompanies the rotation of the cooling roller by providing an intercepting member upstream from the position of the gas blowing as viewed in the rotating direction of the cooling roller.

The present inventor made exhaustive studies to identify the cause of the occurrence of craters in the surface of the resin with which the base is laminated in a method for manufacturing laminates by blowing a gas that can permeate the resin film from a gas blast nozzle to a cooling roller surface to form a gas curtain and intercepting the accompanying air flowing toward the nip point along with the rotation of the cooling roller. As a result, the inventor reached a finding that, when the permeating gas is brought to the nip position by the rotation of the cooling roller, it is accompanied by air, and the accompaniment of air dilutes the concentration of the permeating gas to weaken its crater-preventive effect. This weakening tendency of the crater-preventive effect was found particularly conspicuous in high-speed manufacture or when the temperature of molten resin discharged from the die was reduced.

According to the invention, since the air flow accompanying rotation of the cooling roller is intercepted by the intercepting member disposed upstream from the position of the gas blowing as viewed in the rotating direction of the cooling roller, the occurrence of craters can be restrained more effectively than where only a gas curtain is provided to make possible manufacture of laminates excelling in surface appearance. Especially, even when the speed of the laminate production line is raised or the temperature of molten resin discharge is reduced, the occurrence of craters can still be restrained effectively and moreover craters can be decreased significantly, with the result that the thickness of the resin film can be safely reduced.

According to a second aspect of the invention, in the method for manufacturing laminates according to the first aspect, the circular distance on the cooling roller from the position of the gas blowing to the intercepting member, as expressed in the central angle of the cooling roller, is not more than 40°.

Herein, the circular distance is expressed in the central angle of the cooling roller from the gas blowing position to the position of the central part of the intercepting member.

By positioning the intercepting member provided for in the second aspect of the invention at not more than 40° from the gas blowing position in addition to the first aspect, the occurrence of craters can be restrained even more effectively.

According to a third aspect of the invention, in the method for manufacturing laminates according to the first or second aspect, the intercepting member is a roller and the roller is arranged in a state of being in contact with the cooling roller in the axial direction of the cooling roller.

Since a roller is used as the intercepting member and the roller is arranged in a state of being in contact with the cooling roller in addition to the first or second aspect, the accompanying air can be intercepted more effectively, the occurrence of craters can be restrained even more. Further, the use of a roller as the intercepting member ensures the freedom of the cooling roller surface from damage even if the member is brought into contact with the cooling roller.

According to a fourth aspect of the invention, in the method for manufacturing laminates according to the third aspect, the roller is rotated in the same direction and at the same speed as the cooling roller.

Since the roller is rotated in the same direction and at the same speed as the cooling roller in addition to the third aspect, the cooling roller can be prevented from being damage.

According to a fifth aspect of the invention, in the method for manufacturing laminates according to the first or second aspect, the intercepting member is a vaned roller, the vaned roller is arranged in a state of not being in contact with the cooling roller in the axial direction of the cooling roller, and the vaned roller is rotated in the reverse direction to the rotating direction of the cooling roller.

Since the intercepting member is a vaned roller in addition to the first or second aspect, the vaned roller is arranged in a state of not being in contact with the cooling roller the axial direction of the cooling roller, and the vaned roller is rotated in the reverse direction to the rotating direction of the cooling roller, the air accompanying the rotation of the cooling roller generates an air flow in the reverse direction to the accompanying air. This makes it possible to significantly prevent accompaniment by the air from the cooling roller, and thereby prevents the concentration of the permeating gas from being diluted.

According to a sixth aspect of the invention, in the method for manufacturing laminates according to the first or second aspect, the intercepting member is another intercepting gas blast nozzle separate from the gas blast nozzle according to any previous aspect, at least one such intercepting gas blast nozzle is arranged upstream from the position of the gas blowing as viewed in the rotating direction of the cooling roller, and a gas that can permeate the resin film is blown onto the roller surface of the cooling roller.

Since an intercepting gas blast nozzle as the intercepting member in addition to the first or second aspect, the accompanying air can be intercepted by blowing a gas that can permeate the resin film onto the cooling roller, and accordingly the concentration of the permeating gas blown from the gas blast nozzle can be prevented from being diluted with the result that the occurrence of craters can be restrained even more effectively.

In order to achieve the object stated above, according to a seventh aspect of the invention, there is provided an apparatus for manufacturing laminates by sticking to the surface of a running belt-shaped base a film of thermoplastic resin discharged in a molten state from a die by nipping the base and resin film between a nip roller and a cooling roller while coating the base with the resin film, comprising a gas blast nozzle which is arranged upstream from the position of the nipping as viewed in the rotating direction of the cooling roller and blows a gas that can permeate the resin film onto the roller surface of the cooling roller; and an intercepting member which is arranged farther upstream from the gas blast nozzle and intercepts air that accompanies the rotation of the cooling roller.

The seventh aspect, which is a hardware version of the process invention according to the first aspect, makes possible manufacture of laminates less susceptible to the occurrence of craters on the surface of the resin film and excelling in surface appearance and, moreover, the invention can be applied irrespective of the type of laminates to be manufactured. It proves particularly effective in high-speed manufacture or when the temperature of molten resin discharged from the die is reduced.

As described above, the method and the apparatus for manufacturing laminates according to the invention facilitate manufacture of laminates less susceptible to the occurrence of craters on the surface of the resin film laminating (stuck to) the base and excels in surface appearance, and can still be effective even when the line speed has become high or the temperature of resin discharge has been reduced.

### BRIEF DESCRIPTION OF THE DRAWINGS

Fig. 1 is an overall configurative diagram showing one mode of manufacturing apparatus, which is a first preferred embodiment of the present invention;
Fig. 2 is an overall configurative diagram showing one mode of manufacturing apparatus, which is a second preferred embodiment of the invention;
Fig. 3 is an overall configurative diagram showing one mode of manufacturing apparatus, which is a third preferred embodiment of the invention; and
Fig. 4 is a graph showing the results of Examples.

### DETAILED DESCRIPTION OF THE PREFERRED EMBODIMENTS

The method and the apparatus for manufacturing laminates, which are preferred embodiments of the present invention will be described in detail below with reference to the accompanying drawings.

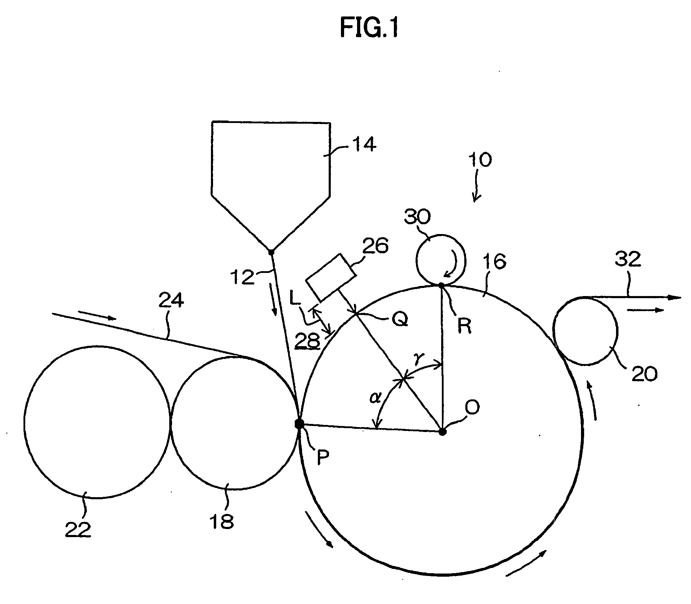

Fig. 1 is an overall configurative diagram showing one mode of manufacturing apparatus 10, which is a first preferred embodiment of the present invention.

As shown in Fig. 1, underneath an extrusion die 14 which extrudes a resin film 12 of thermoplastic resin in a molten state, there are arranged, adjoining each other in parallel, a cooling roller 16 and a nip roller 18, and on the other side of the nip roller 18 with the cooling roller 16 in-between a peeling roller 20 is arranged adjoining the cooling roller 16 in parallel. Further, a backup roller 22 is provided on the other side of the cooling roller 16 with the nip roller 18 in-between. A running belt-shaped base 24 is nipped in the nip position M, where the cooling roller 16 and the nip roller 18 come into contact with each other, while being coated with the resin film 12 extruded from the extrusion die 14, and the base 24 and the resin film 12 are stuck together. The base 24 to which the resin film 12 is stuck runs in contact with the surface of the cooling roller 16 and is thereby cooled, and is peeled off the cooling roller 16 by the peeling roller 20. A laminate 32 is thereby fabricated.

Incidentally, the base 24 in the configuration of the invention can be made of paper, resin or metal according to the required laminate 32. The thermoplastic resin may be any known thermoplastic resin such as one of polyolefin resins including polyethylene and polypropylene.

Near the nip point P between the base 24 and the resin film 12, there is disposed a gas blast nozzle 26 from which gas is blown toward the surface of the cooling roller 16. The gas to be blown from the gas blast nozzle 26 may be any appropriate gas that can permeate the resin film 12, such as CO₂ gas, O₂ gas, H₂O gas or He gas. The gas blast nozzle 26 is shaped in a throttle form long in the widthwise direction of the cooling roller 16, and the gas blown thereby, accompanied by the rotation of the cooling roller 16, is carried to the nip point P. The occurrence of craters is usually kept under control by thereby replacing the air in the area of the nip point P with resin-permeating gas.

However, in the manufacture of such laminates 32, when the permeating gas blown from the gas blast nozzle 26 by the rotation of the cooling roller 16 to the nip point P, it is accompanied by air, which dilutes the concentration of the permeating gas and thereby weakens the crater-preventive effect of the permeating gas. This tendency has been found particularly conspicuous in high-speed manufacture or when the temperature of molten resin discharged from the die is reduced.

Therefore according to the invention, an intercepting member 30 is provided upstream from the gas blast nozzle 26 to intercept the accompanying air at the nip point P between the base 24 and the resin film 12 brought by the rotation of the cooling roller 16. Fig. 1 shows a roller as the intercepting member 30.

The preferable position near the gas blast nozzle 26 to install the intercepting member 30, as shown in Fig. 1, is such that, where the circular distance of the cooling roller 16 from the blast point Q on the surface of the cooling roller 16 exposed to the blast from the gas blast nozzle 26 to the intercepting member 30 (hereinafter referred to as the "distance from the gas blast nozzle") is represented by the central angle γ of the cooling roller (the angle formed by the line linking the center O of the cooling roller 16 and the blast point Q and the line linking the center O and the intercepting member 30) is not more than 40°, more preferably not more than 25°. If the circular distance from the blast point Q to the intercepting member 30 surpasses 40° in the central angle, the intercepting member 30 will become unable to intercept the accompanying air brought by the rotation of the cooling roller 16 to the nip point P between the base 24 and the resin film 12, and the blast gas will be dispersed to reduce the crater-preventive effect.

Further, where the intercepting member 30 is a roller as shown in Fig. 1, it can be brought into contact with the cooling roller 16 to have it rotate at the same speed as the cooling roller 16. If it turns at the same speed as the cooling roller 16, the friction between the cooling roller 16 and the intercepting roller will be reduced to prevent the cooling roller 16 from being damaged.

It is preferable for the surface of the intercepting roller to be made of a material neither too hard nor too soft, such as hard sponge or rubber. If the surface of the intercepting roller is too hard, it will be impossible to evenly pressurize the cooling roller 16 or, if it is too soft, the surface of the intercepting roller will wear soon possibly to invite defects in the laminates 32.

It is preferable for the diameter of the intercepting roller to be small. A smaller diameter would enable the intercepting roller to be arranged closer to the gas blast nozzle 26 and to serve more effectively as the intercepting member 30 as stated above.

Thus, where the intercepting member 30 is a roller, the contact point R between the cooling roller 16 and the intercepting roller can be shielded by its contact with the cooling roller 16 to make it possible to significantly prevent accompaniment by the air. As it further enables the gas blown from the gas blast nozzle 26 to be prevented from being dispersed and to enclose it near the nip point, the occurrence of craters can be restrained to manufacture laminates excelling in surface appearance.

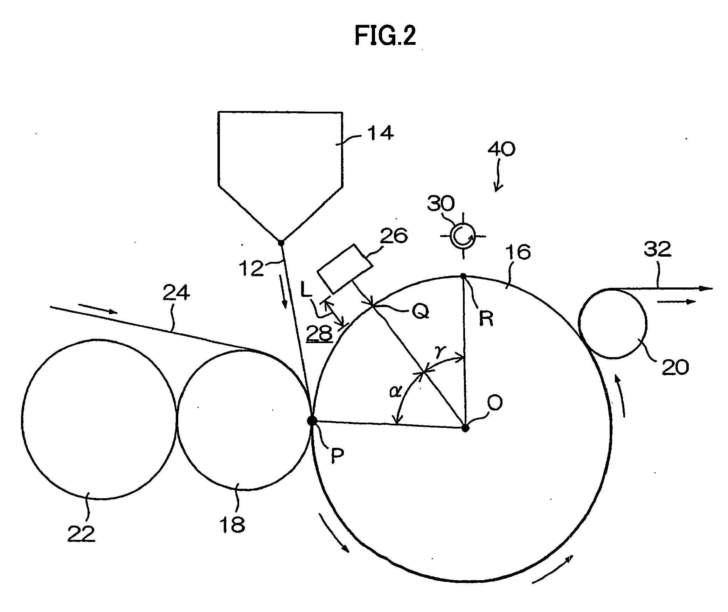

Fig. 2 is an overall configurative diagram showing one mode of manufacturing apparatus 40, which is a second preferred embodiment of the invention. Regarding the same members and devices as their respective counterparts in the manufacturing apparatus 10 shown in Fig. 1, description will be dispensed with.

In the manufacturing apparatus 40 the intercepting member 30 is a vaned roller as shown in Fig. 2. The vaned roller is arranged to be not in contact with the cooling roller 16, and rotates in the reverse direction to that of the cooling roller 16. By rotating the vaned roller in the reverse direction to that of the cooling roller, an air flow in the reverse direction to the accompanying air is generated. This makes it possible to significantly prevent accompaniment by the air from the cooling roller and the concentration of the permeating gas from being diluted. Moreover, since the vaned roller is not in contact with the cooling roller 16, there is no fear of damaging the cooling roller 16 unlike in the case where the intercepting member 30 is a plain roller.

Thus, where the intercepting member 30 is a vaned roller, the concentration of the permeating gas blown from the gas blast nozzle 26 can be prevented from being diluted and to enclose the gas near the nip point P with the result that the occurrence of craters can be restrained and laminates excelling in surface appearance can be manufactured.

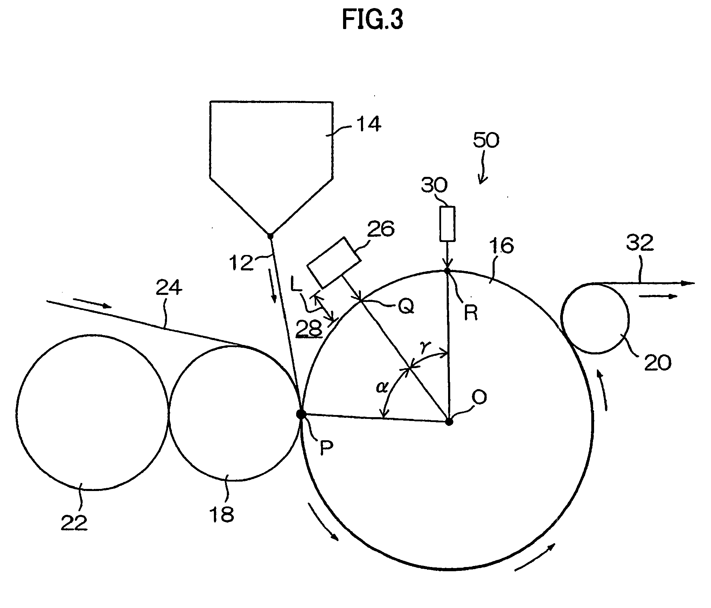

Fig. 3 is an overall configurative diagram showing one mode of manufacturing apparatus 50, which is a third preferred embodiment of the invention. Regarding the same members and devices as their respective counterparts in the manufacturing apparatus 10 shown in Fig. 1, description will be dispensed with.

In the manufacturing apparatus 50, the intercepting member 30 is an intercepting gas blast nozzle as shown in Fig. 3, and gas that can permeate the cooling roll 12 is blown from the intercepting gas blast nozzle. Where the intercepting member 30 is an intercepting gas blast nozzle, the accompanying air can be intercepted by a curtain of gas blown from the intercepting gas blast nozzle. Furthermore, as the accompanying air can be intercepted by the curtain of gas, there is no fear of damaging the cooling roller 16 unlike in the case where the intercepting member 30 is a plain roller.

Thus, where the intercepting member 30 is an intercepting gas blast nozzle, the gas blown can prevent accompaniment by the air and gas blown from the gas blast nozzle 26 from being dispersed. Moreover, as the same gas as what is blown from the gas blast nozzle 26 is supplied by the intercepting member 30, the gas concentration in the vicinities of the nip point P can be kept high with the result that the occurrence of craters can be restrained and laminates excelling in surface appearance can be manufactured.

Incidentally, the preferable conditions of the laminate manufacturing apparatus 10 according to the invention are particularly effective when the speed of the line for manufacturing laminates 32 is increased to 300 m/minute and the rotation of the cooling roller 16 is made faster. The influence of the air accompanying the cooling roller 16 increases so much at a very high speed of the production line at or above 300 m/minute that no sufficient effect to intercept the accompanying air can be achieved merely by blowing gas toward the surface of the cooling roller 16 from the gas blast nozzle 26. This is because the once replaced gas is dispersed from the air by the turbulent flow in the area 28 surrounded by the resin film 12 and the cooling roller 16.

As disclosed so far, the invention makes if possible to significantly restrain the occurrence of craters and to manufacture laminates 32 excelling in surface appearance. Especially as the occurrence of craters can be effectively restrained even in a high speed region where the line speed surpasses 300 m/minute, productivity can be enhanced. Furthermore, since craters can be significantly reduced, the thickness of the resin film 12 can be safely reduced, and it is thereby made possible to reduce the raw material cost.

Although the foregoing description referred to some embodiments of the method and the apparatus for manufacturing laminates according to the present invention, the invention is not limited to these embodiments, but can be embodied in various other modes.

For instance, the intercepting member 30 according to the invention can be equipped with not just one intercepting gas blast nozzle but with a plurality of such nozzles as well.

### Examples

Examples in which laminates 32 were manufactured by using the laminate manufacturing apparatus 10 will be described below.

Laminates 32 were fabricated by laminating the surface of a belt-shaped base 24 (crude paper) measuring 175 µm in thickness and 300 mm in width with a resin film 12 (polyethylene) ranging in thickness from 25 to 30 µm at a line speed of 300 m/minute.

Further, the gas blast nozzle 26 was so installed that the distance from the nip point P (angle α) was 45° and the distance L from the cooling roller 16 was 20 mm, and CO₂ gas was blown from the gas blast nozzle toward the cooling roller 16 at a wind velocity of 3 m/second and an air flow rate of 36 liters/minute. Also, an air intercepting roll 30 was so installed that the distance (angle γ) from the gas blast nozzle 26 was in a position of 20°, 40° or 60°. The roller of the intercepting member 30 was rotated accompanying the cooling roller 16 and at the same speed.

As Comparative Example 1, laminates 32 were fabricated by lamination under the same conditions as in the foregoing Examples with the gas blast nozzle 26 removed and the roller of the intercepting roller 30 also removed.

As Comparative Example 2, laminates 32 were fabricated by lamination under the same conditions as in the foregoing Examples with only the roller of the intercepting member 30 removed.

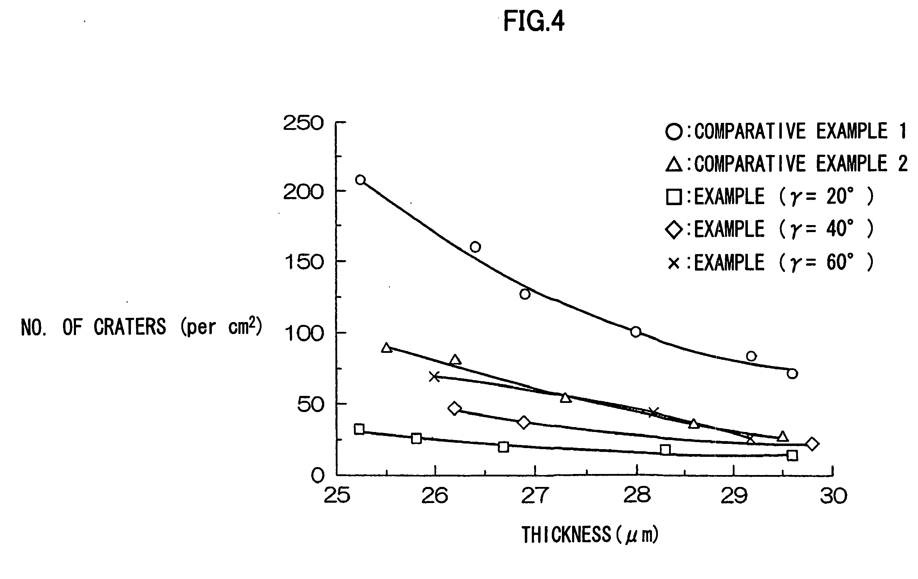

The graph of Fig. 4 shows the relationship between the thickness of the resin film 12 (polyethylene) and the number of craters under each set of conditions.

Incidentally, the "number of craters" in Fig. 4 is the number per square centimeter of the resin film surface of the fabricated laminates 32.

As is seen from the results diagrammed in Fig. 4, the occurrence of craters is less in the laminates 32 of Comparative Example 2 and the Examples in which the gas blast nozzle 26 was provided than in those of Comparative Example 1 in which neither the gas blast nozzle 26 nor the roller of the intercepting member 30 was present. Furthermore, as is seen from the Examples, the closer the roller of the intercepting member 30 to the gas blast nozzle 26, the less the occurrence of craters. The occurrence of craters was especially little when the distance (angle γ) from the gas blast nozzle 26 was 40° or less.

Also, the thinner the thickness of the resin film 12, the greater the difference between the Examples provided with the roller of the intercepting member 30 and the Comparative Examples in which the intercepting member 30 is absent.

As described above, by disposing the intercepting member 30 to intercept the accompanying air brought to the nip point P between the base 24 and the resin film 12 along with the rotation of the cooling roller 16, it was made possible to manufacture laminates 32 with less occurrence of craters in the surface of the resin film 12 and excelling in surface appearance. Moreover, tests with various resin film types gave similar results, endorsing the applicability of the invention irrespective of the type of laminates to be manufactured.

## Claims

1. A method for manufacturing laminates **characterized by** comprising the steps of:
nipping a running belt-shaped base (24) and a film (12) of thermoplastic resin discharged in a molten state from a die (14) between a nip roller (18) and a cooling roller (16) while coating the base (24) with the resin film (12) whereby the base (24) and the resin film (12) are stuck together;
blowing a gas that can permeate the resin film (12) from a gas blast nozzle (26) onto the roller surface of the cooling roller (16) whereby the gas is brought to the position of the nipping by accompanying the rotation of the cooling roller (16); and
intercepting an air that accompanies the rotation of the cooling roller (16) by providing an intercepting member (30) upstream from the position of the gas blowing as viewed in the rotating direction of the cooling roller (16).

2. The method for manufacturing laminates according to claim 1,
wherein the circular distance on the cooling roller (16) from the position of the gas blowing to the intercepting member (30), as expressed in the central angle of the cooling roller (16), is not more than 40°.

3. The method for manufacturing laminates according to claim 1 or 2,
wherein the intercepting member (30) is a roller and the roller is arranged in a state of being in contact with the cooling roller (16) in the axial direction of the cooling roller (16).

4. The method for manufacturing laminates according to claim 3,
wherein the roller is rotated in the same direction and at the same speed as the cooling roller (16).

5. The method for manufacturing laminates according to claim 1 or 2,
wherein the intercepting member (30) is a vaned roller, the vaned roller is arranged in a state of not being in contact with the cooling roller (16) in the axial direction of the cooling roller (16), and the vaned roller is rotated in the reverse direction to the rotating direction of the cooling roller (16).

6. The method for manufacturing laminates according to claim 1 or 2,
wherein the intercepting member (30) is another intercepting gas blast nozzle (26) separate from the gas blast nozzle (26), at least one such intercepting gas blast nozzle (26) is arranged upstream from the position of the gas blowing as viewed in the rotating direction of the cooling roller (16), and a gas that can permeate the resin film (12) is blown onto the roller surface of the cooling roller (16).

7. An apparatus for manufacturing laminates by sticking to the surface of a running belt-shaped base (24) a film (12) of thermoplastic resin discharged in a molten state from a die (14) by nipping the base (24) and resin film (12) between a nip roller (18) and a cooling roller (16) while coating the base (24) with the resin film (12), **characterized by** comprising:
a gas blast nozzle (26) which is arranged upstream from the position of the nipping as viewed in the rotating direction of the cooling roller (16) and blows a gas that can permeate the resin film (12) onto the roller surface of the cooling roller (16); and
an intercepting member (30) which is arranged farther upstream from the gas blast nozzle (26) and intercepts air that accompanies the rotation of the cooling roller (16).
